## Europäisches Patentamt

## European Patent Office

## Office européen des brevets

(19)

(11) Veröffentlichungsnummer: **0 109 635 B1**

(12) **EUROPÄISCHE PATENTSCHRIFT**

(45) Veröffentlichungstag der Patentschrift:
19.03.86

(21) Anmeldenummer: 83111340.2

(22) Anmeldetag: 12.11.83

(51) Int. Cl.⁴: **C 10 K 1/20,** C 10 K 1/34, C 01 B 31/20, B 01 D 53/36, B 01 J 23/80

(54) Verfahren zur Reinigung von CO und/oder CO2 enthaltenden Gasen.

(30) Priorität: 23.11.82 DE 3243206

(43) Veröffentlichungstag der Anmeldung:
30.05.84 Patentblatt 84/22

(45) Bekanntmachung des Hinweises auf die Patenterteilung:
19.03.86 Patentblatt 86/12

(84) Benannte Vertragsstaaten:
BE DE FR GB NL

(56) Entgegenhaltungen:
EP - A - 0 011 150
DE - A - 2 132 020
DE - C - 411 389
GB - A - 1 522 389

(73) Patentinhaber: BASF Aktiengesellschaft,
Carl-Bosch-Strasse 38, D-6700 Ludwigshafen (DE)

(72) Erfinder: Broecker, Franz Josef, Dr., Schwanthaler Allee 20, D-6700 Ludwigshafen (DE)
Erfinder: Gettert, Hans, Dr., Muldweg 2, D-6945 Gross-Sachsen (DE)
Erfinder: Kaempfer, Knut, Dr., Peterstrasse 1, D-6700 Ludwigshafen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Unter dem allgemeinen Begriff Synthesegas versteht man Gase, die vornehmlich $H_2$, CO und $CO_2$ rein oder als Gemisch enthalten. Sie werden gewöhnlich durch Steamreforming oder durch partielle Oxidation aus höheren Kohlenwasserstoffen hergestellt, oder fallen als Nebenprodukte bei der Chloralkalielektrolyse, der Herstellung von Ethylen oder Acetylen an.

Synthesegas wird für die verschiedensten Anwendungszwecke benötigt wie z.B. die Methanol-, Ammoniak-, Fischer-Tropsch-Synthese, für Hydrierungen, Entschwefelungen von Mineralölprodukten oder die Herstellung von Erdgasaustauschgas.

Bei den genannten Verfahren werden Katalysatoren verwendet. Diese Katalysatoren werden von Fall zu Fall im Festbett, als Suspension oder in Form einer homogenen Lösung eingesetzt. Die Aktivkomponente der Katalysatoren besteht entweder aus einem oder mehreren reduzierten Metallen oder deren Oxiden bzw. Sulfiden.

In anderen Fällen, speziell bei der homogenen Katalyse, liegen die aktiven Metalle als lösliche Komplexe mit den verschiedensten Liganden vor. Alle, sowohl die homogen als auch die heterogen eingesetzten Katalysatoren haben den gemeinsamen Nachteil, daß sie von sogenannten Katalysatorgiften mehr oder weniger irreversibel geschädigt werden.

Sind im Reaktionsgemisch Bestandteile enthalten, die mit den Katalysatoren stabile Verbindungen bilden, d.h. die aktiven Zentren blockieren, so spricht man von einer Vergiftung des Katalysators. Das verursachende Agenz bezeichnet man als Katalysatorgift.

Es gibt auch Stoffe, die nachteilige Effekte haben z.B. metallcarbonyle, die zwar keine Vergiftung des Katalysators bewirken, sich aber durch Zersetzung unter den Reaktionsbedingungen im Katalysatorbett anreichern. Diese Verunreinigungen können Schwierigkeiten bei der Aufarbeitung des Katalysators bereiten oder die Selektivität eines Katalysators negativ beeinflussen, dadurch, daß bei Erreichen einer bestimmten Konzentration der eingeschleppten Metalle deren eigene katalytische Eigenschaften Nebenreaktionen verursachen. In einem Tieftemperatur-Konvertierungsreaktor kann durch Nickelcarbonyl eine Methanisierung ablaufen.

Es gibt bereits eine ganze Reihe von Verfahren zur Reinigung von Gasen, z.B. durch Gaswäschen, die mit Hilfe von chemischen oder physikalischen Lösungsmitteln unter Druck im Gegenstrom die Verunreinigungen aus Gasen auswaschen, oder Reinigung durch Adsorption an A-Kohle oder Molekularsieben mit anschließender Druckwechselbzw. Temperaturwechselregeneration. Aber auch chemische Verfahren, z.B. die Entschwefelung von Mineralölprodukten durch Hydrierung an Co/Mo- oder Ni/Mo-Katalysatoren und anschließende Bindung des entstandenen $H_2S$ an ZnO sind bekannt.

Die Aufgabe der meisten Verfahren besteht darin, große Mengen an Verunreinigungen aus Gasströmen zu entfernen. Sie sind weniger geeignet, kleine Mengen an Verunreinigungen oder Spuren zu entfernen, die in der Nähe der Nachweisgrenze liegen. Reinigungsverfahren, die Molekularsiebe verwenden, eignen sich zwer für die Spurenentfernung, haben aber den entscheidenden Nachteil, daß sie nicht selektiv arbeiten. Neben unerwünschten Verunreinigungen entfernen sie auch nicht störende Bestandteile, z.B. Wasser oder $CO_2$. Dadurch wird ihre Kapazität eingeschränkt und die nach diesem Prinzip arbeitenden Anlagen müssen in kurzen Zeitabständen mit erheblichem Energiesufwand regeneriert werden.

Es ist auch ein Verfahren zur Entfernung von Blausäure aus schwefelwasserstoffhaltigen Gasen bekannt, wobei Blausäure an ZnO bzw. ZnS-Katalysatoren bei Temperaturen oberhalb 180°C hydriert wird und die Entfernung von CO aus wasserstoffhaltigen Gasen durch Methanisierung an Ni-Katalysatoren bei Temperaturen um 250°C.

Aus GB-A-1 522 389 ist ein Verfahren zur Entfernung von Schwefelverbindungen aus SNG mit Hilfe von Kupfer-Zink-Aluminiumoxidkatalysatoren und aus DE-A-21 32 020 ein Verfahren zur Nachverbrennung von Motorabgasen mit Kupfer-Zink-Kaaelysatoren vom Malachittyp bekannt. Die zu reinigenden Gase und der Zweck des Reinigungsverfahrens sind verschieden von den hier beschriebenen. Es gelingt auch nicht durch Anwendung der bekannten Verfahren und Katalysatoren die neben Schwefel oftmals in Spuren auftretenden, vielfältigen Verunreinigungen aus fossilen Brennstoffen zu entfernen.

Die Erfindung betrifft die Verwendung eines Cu/ZnO-Katalysators, der durch thermische Zersetzung aus einem Katalysatorvorläufer vom Zinkhydroxydcarbonattyp der allgemeinen Formel $Cu_x Zn_y (OH)_6 (CO_3)_2$, worin $x + y = 5$ beträgt und x und y ganze oder gebrochene Zahlen im Bereich von

$x = 1,0 - 2,5$
$y = 2,5 - 4,0$

erhalten wurde, zur Reinigung von CO und $H_2$ enthaltendem Synthesegas von Schwefelverbindungen.

Die Erfindung betrifft weiterhin die Verwendung eines Cu/ZnO-Katalysators, der durch thermische Zersetzung aus einem Katalysatorvorläufer vom Zinkhydroxydcarbonattyp der allgemeinen Formel $Cu_x Zn_y (OH)_6 (CO_3)_2$, worin $x + y = 5$ beträgt und x und y ganze oder gebrochene Zahlen im Bereich von

$x = 1,0 - 2,5$
$y = 2,5 - 4,0$

erhalten wurde, zur Reinigung von mit Schwefelverbindungen verunreinigter Kohlensäure.

Die Nachteile der bekannten Verfahren bei der

Feinreinigung von $H_2/CO$ und/oder $CO_2$ enthaltenden Gasen, von Schwefelverbindungen und anderen Verunreinigungen werden durch die Anwendung der erfin-dungsgemäßen Katalysatoren vermieden. Man kenn die zu reinigenden Gase bei erhöhten Temperaturen direkt durch eine Katalysatorschüttung leiten, in der sich ein Cu/ZnO-Katalysator befindet, der durch thermische Zersetzung aus einer Mischkristallverbindung aus Zinkhydroxidcarbonat hergestellt worden ist, wobei die Raumgeschwindigkeit auf 500 bis 5000 $Nm^3/m^3$ kat..h eingestellt wird.

Eine besondere Ausführungsform besteht darin, daß man den zu reinigenden Gasen, sofern diese zusätzlich störende Metallcarbonyle enthalten, Sauerstoff oder Sauerstoff enthaltende Gase beimischt, so daß der Sauerstoffgehalt 20 bis 200 Vol.-ppm beträgt und sie sodann vor der eigentlichen katalytischen Behandlung bei Temperaturen von 50 bis 150° C mit Raumgeschwindigkeiten von 500 bis 5000 $Nm^3/m^3$ kat..h durch ein Aktivkohlebett leitet.

Eine besondere Herstellungsweise des Katalysators besteht darin, daß bei der Fällung des Katalysatorvorläufers 1 bis 15 Atom-% Aluminium, Chrom und/oder Bor als strukturelle Promotoren mitgefällt werden.

Zu den Verunreinigungen, die insbesondere in Synthesegasen auftreten können und die mit dem erfindungsgemäßen Verfahren entfernt werden sollen, gehören in erster Linie Schwefelverbindungen wie z.B. $H_2S$, COS, $CS_2$ $CH_3SH$ oder auch höhere Mercaptane. Weiterhin sind in solchen Gasen, wenn sie durch partielle Oxidation aus fossilen Brennstoffen erzeugt werden, Verbindungen wie z.B. HCN, CHOOH, HCl, Fe-, Ni- oder V-carbonyle, aber auch nicht umgesetzter Sauerstoff, enthalten. Man kann aber auch Quecksilber, das in dem Wasserstoff, der bei der Chloralkalieelektrolyse anfällt, enthalten ist, mit dem erfindungsgemäßen Verfahren quantitativ entfernen.

Das erfindungsgemäße Reinigungsverfahren ist nicht auf Synthesegas beschränkt, sondern auch in anderen Fällen anwendbar, z.B. zur Reinigung von mit Schwefelbindungen verunreinigten Kohlensäure, wenn die Kohlensäure für die Herstellung von Tafelwasser verwendet werden soll.

Bei der Reinigung von CO-enthaltenden Gasen arbeitet man zweck-mäßig in zwei Stufen. In der ersten Stufe werden dabei die im Gas enthaltenen Metallcarbonyle entfernt. Dazu wird das Gas auf Temperaturen von 50 bis 150° C, vorteilhaft auf 100° C, erhitzt und mit einer solchen Menge an Sauerstoff oder Sauerstoff enthaltenden Gasen versetzt, das sich am Eingang in das erste Katalysatorbett eine Sauerstoffkonzentration von 20 bis 200 Vol.-ppm, vorzugsweise 50 bis 100 Vol.-ppm einstellt.

In der ersten Stufe verwendet man Aktivkohle als Katalysator. Die im Gas enthaltenan Metallcarbonyle reagieren mit Sauerstoff unter Bildung der Metalloxide. Da diese nicht flüchtig sind, werden sie im Aktivkohlebett abgelagert. Die Raumgeschwindigkeit in dieser Stufe sollte im Bereich zwischen 500 bis 5000 $Nm^3/m^3$ Kst.. h, vorzugsweise zwischen 1000 bis 2000 $Nm^3/m^3$ Kat.. h, liegen. Nach Verlassen der Aktivkohleschicht gelengt das Gas direkt in eine zweite Stufe, in der sich der erfindungsge-mäße Cu/ZnO-Katalysator befindet.

Bei der Herstellung des Katalysators entsteht zuerst bzw. durch Fällung ein Katalysatorvorläufer in Form einer Mischkristallverbindung vom Zinkhydroxidcarbonattyp $(Zn_5(OH)_6(CO_3)_2)$. In diesem Zinkhydroxidcarbonat wird ein Teil der $Zn^{2+}$-Ionen durch $Cu^{2+}$-Ionen ersetzt, und so ein Mischkristall gebildet. Für das erfindungsgemäße Verfahren benötigt man Katalysatorvorläufer der allgemeinen Formel

$$Cu_x Zn_y (OH)_6(CO_3)_2$$

mit den Maßgaben, daß erstens $x + y = 5$ beträgt und zweitens x und y ganze oder gebrochene Zahlen im Bereich von

$x = 1,0$ bis $2,5$

$y = 2,5$ bis $4$

darstellen.

Die Fällung der Komponenten in Form dieser Mischkristalle führt zu einer stomaren Verteilung der Aktivkomponenten auf den Gitterplätzen des Mischkristalls. Bei der anschließenden thermischen Zersetzung der Mischkristallverbindung zum oxidischen Katalysator erhält man eine optimale Verteilung der Komponenten.

Zur Hemmung der thermischen Rekristallisation hat es sich als günstig erwiesen, bei der Fällung des Katalysatorvorläufers 1 bis 15 Atom-% Aluminium, Chrom und/oder Bor als strukturelle Promotoren mitzufällen.

Der oxidische Katalysator wird im allgemeinen nach Zusatz von Gleitmitteln zu Tabletten verformt. Zur Erlangung seiner aktiven Form wird der Katalysator im Reaktor mit einem $H_2/N_2$-Gemisch reduziert. Die Raumgeschwindigkeit in dieser Stufe sollte im Bereich zwischen 500 bis 5000 $Nm^3/m^3$ Kat.. h liegen.

Es ist bekannt, reine Cu-Katalysatoren zur Spurenentfernung von Sauerstoff, reine ZnO-Kontakte für die Entfernung von $H_2S$ einzusetzen. Zur Entfernung von Schwefelverbindungen an ZnO ist es jedoch zweckmäßig, eine Hydrierstufe vorzuschalten, die die jeweiligen Schwefelverbindungen in $H_2S$ umwandelt, die dann am ZnO absorbiert werden. Als hydrieraktive Katalysatoren setzt man für diesen Zweck vorteilhaft schwefelfeste Co/Mobzw. Ni/Mo-Kontakte ein.

Es war überraschend, daß bei der Verwendung des erfindungsgemäßen Cu/ZnO-Katalysators für die Feinreinigung schwefelhaltiger Gase keine rasche Desaktivierung eintritt. Der Katalysator behält überraschend lange seine Fähigkeit nicht nur alle Schwefelverbindungen zurückzuhalten, sondern gleichzeitig eine große Zahl anderer störender Verunreinigungen, z.B. freien Sauerstoff, HCN, CHOOH, HCl und Quecksilber zu entfernen.

Dieses überraschende Ergebnis bzw. außergewöhnliche Verhalten der erfindungsgemäßen Katalysatoren könnte so erklärt werden, daß im Nachhinein der als Hauptverunreinigung im Gas befindliche Schwefel nicht irreversibel am Kupfer gebunden wird, sondern wegen der atomaren Verteilung von Cu und ZnO infolge der spezifischen Herstellungsmethode in einer sekundären Festkörperreektion an das ZnO unter Bildung des stabileren ZnS übertragen wird. Das Kupfer steht dann für weitere Reaktionen zur Verfügung. Dieses Verhalten des erfindungsgemäßen Katalysators ist umso überraschender, als die bekannten ZnO-Katalysatoren erst bei Temperaturen um 300°C Schwefelwasserstoff in ähnlich quantitativer Form aus Gasen entfernt.

Das erfindungsgemäße Verfahren soll an drei Beispielen erläutert werden. Im ersten Beispiel wird die Herstellung des erfindungsgemäßen Katalysators beschrieben.

In den Beispielen 2 und 3 wird jeweils die Reinigung eines CO-haltigen und eines CO-freien Gases beschrieben.

**Beispiel 1**

Herstellung eines Aluminium dotierten Cu/ZnO-Kontaktes:

Zunächst wird ein mit Aluminium dotierter Mischkristall von Zinkhydroxidcarbonattyp aus zwei Lösungen gefällt. Die Lösungen werden wie folgt hergestellt:

Lösung 1:

7,200 kg $Cu(NO_3)_2$. 3 $H_2O$
11,275 kg $Zn(NO_3)_2$. 6 $H_2O$ und
1,473 kg $Al(NO_3)_3$. 9 $H_2O$
werden in Wasser gelöst und zu 36 l Lösung aufgefüllt.

Lösung 2:

7,850 kg Soda werden in Wasser gelöst, so daß insgesamt

37 l Lösung entstehen.

Durch parallelen Zulauf werden die beiden Lösungen in einen beheizbaren Rührkessel gepumpt und so der Katalysatorvorläufer ausgefällt. Die Zulaufgeschwindigkeit der beiden Lösungen wird so geregelt, daß während der Fällung ein pH-Wert von 7 bis 7,5 eingehalten wird. Gemessen wird der pH-Wert mit einer Elektrode, die ständig mit Lymphanpapier überprüft wird.

Während der Fällung wird im Kessel eine Temperatur von 80°C eingestellt. Nach der Fällung wird noch 15 bis 60 Minuten bei 60 bis 80°C nachgerührt und dann der Niederschlag abfiltriert und nitratfrei gewaschen. Der Filterkuchen wird entweder im Trockenschrank bei 115°C getrocknet und anschließend bei 270°C kalziniert oder durch Sprühtrocknung getrocknet und gleichzeitig kalziniert. Durch die Sprühtrocknung erhält das oxidische Produkt einen Glühverlust von 9,5 Gew.-%. Die Ermittlung des Glühverlustes erfolgt durch 2-stündiges Erhitzen auf 900°C.

Das so erhaltene Produkt wird nach Zusatz von Graphit als Gleitmittel zu Tabletten verformt. Man erhält dann oxidische Formlinge mit einer Stirndruckfestigkeit von 500 Kp/cm² und einer spezifischen Oberfläche nach BET von 110 m²/g.

**Beispiel 2**

Ein Synthesegas, das aus etwa 48,5 Vol.-% CO und 51,5 Vol.-% $H_2$ besteht und durch partielle Oxidation eines atmosphärischen Rückstandsöls gewonnen wird, enthält als Verunreinigungen 1,5 mg/Nm³ Schwefelverbindungen in Form von $H_2S$, COS und $CH_3SH$, 1 mg/Nm³ HCN und 0,4 mg/Nm³ Ni-, Fe- und V-Carbonyl.

1000 Nm³ dieses Synthesegases werden mit 100 l Sauerstoff gemischt und in einem Wärmetauscher auf 100°C aufgeheizt und von oben her in einen Reaktor geleitet. Im oberen Teil des Reaktors befindet sich Aktivkohle. Die Raumgeschwindigkeit in diesem Teil des Reaktors beträgt 2000 Nm³/m³ Kat.. h. Eine Analyse des Gases, das die Aktivkohleschicht verläßt, zeigt, daß der Carbonylgehalt unter die Nachweisgrenze abgesunken ist.

Das Gas gelangt danach ohne weitere Behandlung in das nachgeschaltete Bett des erfindungsgemäßen Cu/ZnO-Katalysators. Das Katalysatorvolumen ist so bemessen, daß sich auch hier eine Raumgeschwindigkeit von 2000 Nm³/m³ Kat.. h einstellt.

Nach Verlassen der Cu/ZnO-Schicht, wird das Gas auf Umgebungstemperatur abgekühlt, um die erneute Bildung von Carbonylen im Rohrleistungssystem zu verhindern.

Blausäurespuren und Schwefelverbindungen sind in dem gereinigten Gas nicht mehr nachweisbar.

**Beispiel 3**

Kohlensäure, die aus der Sauergaswäsche einer Konvertierungsanlage stammt, soll soweit gereinigt werden, daß sie den Anforderungen des Lebensmittelgesetzes entspricht und für die Herstellung von Tafelwasser verwendet werden kann. Die Kohlensäure ist bei 40°C mit Wasser gesättigt und enthält neben 0,1 Vol.-% Wasserstoff noch bis zu 6 mg Schwefelverbindungen in Form von $H_2S$, COS und $CH_3SH$. Das Gas wird auf 100°C aufgeheizt und in einen Reaktor geleitet, in dem sich der erfindungsgemäße Cu/ZnO-Katalysator befindet. Es wird eine Raumgeschwindigkeit von 2000 Nm³/m³ Kat.. h eingestellt.

Am Ausgang des Reaktors ist der Gehalt an Schwefelverbindungen unter die Nachweisbarkeitsgrenze abgesunken.

## Patentansprüche

1. Verwendung eines Cu/ZnO-Katalysators, der durch thermische Zersetzung aus einem Katalysatorvorläufer vom Zinkhydroxydcarbonattyp der allgemeinen Formel
$Cu_x Zn_y (OH)_6(CO_3)_2$,
worin $x + y = 5$ beträgt und x und y ganze oder gebrochene Zahlen im Bereich von
$x = 1,0 - 2,5$
$y = 2,5 - 4,0$
erhalten wurde, zur Reinigung von CO und $H_2$ enthaltendem Synthesegas von Schwefelverbindungen.

2. Verwendung eines Cu/ZnO-Katalysators, der durch thermische Zersetzung aus einem Katalysatorvorläufer vom Zinkhydroxydcarbonattyp der allgemeinen Formel
$Cu_x Zn_y (OH)_6(CO_3)_2$,
worin $x + y = 5$ beträgt und x und y ganze oder gebrochene Zahlen im Bereich von
$x = 1,0 - 2,5$
$y = 2,5 - 4,0$
erhalten wurde, zur Reinigung von mit Schwefelverbindungen verunreinigter Kohlensäure.

3. Verfahren zur Renigung von CO und/oder $CO_2$ enthaltenden Gasen von Schwefelverbindungen und anderen Verunreinigungen durch Umsetzung bei erhöhter Temperatur in Gegenwart von Cu/ZnO-Katalysatoren, dadurch gekennzeichnet, daß man den zu reinigenden Gasen Sauerstoff oder Sauerstoff enthaltende Gase beimischt, so daß der Sauerstoffgehalt 20 bis 200 Vol.-ppm beträgt und sie sodann vor der eigentlichen katalytischen Behandlung bei Temperaturen von 50 bis 150°C mit Raumgeschwindigkeiten von 500 bis 5000 $Nm^3/m^3$ Kat..h durch ein Aktivkohlebett leitet.

## Claims

1. The use of a Cu/ZnO catalyst which has been prepared by thermal decomposition of a catalyst precursor of the zinc hydroxide carbonate type of the general formula
$Cu_x Zn_y (OH)_6(CO_3)_2$,
where $x + y = 5$, and x and y are integers or mixed numbers in the ranges
$x = 1.0 - 2.5$
$y = 2.5 - 4.0$,
for the removal of sulphur compounds from synthesis gas containing CO and $H_2$.

2. The use of a Cu/ZnO catalyst which has been prepared by thermal decomposition of a catalyst precursor of the zinc hydroxide carbonate type of the general formula
$Cu_x Zn_y (OH)_6(CO_3)_2$,
where $x + y = 5$, and x and y are integers or mixed numbers in the ranges
$x = 1.0 - 2.5$
$y = 2.5 - 4.0$,
for the purification of carbon dioxide contaminated with sulphur compounds.

3. A process for the removal of sulphur compounds and other impurities from gases containing CO and/or $CO_2$ by reaction at elevated temperature in the presence of a Cu/ZnO catalyst, wherein the gas to be purified is mixed with oxygen or oxygen-containing gases so that the oxygen content is from 20 to 200 vol. ppm and, before the actual catalytic treatment, is passed through an active carbon bed at from 50 to 150°C, at a space velocity of 500 - 5,000 $m^3$ (S.T.P.) per $m^3$ of catalyst per hour.

## Revendications

1. Utilisation d'un catalyseur au Cu/ZnO, préparé par décomposition thermique d'un précurseur de catalyseur du type hydroxyde-carbonate de zinc de la formule générale
$Cu_x Zn_y (OH)_6 (CO_3)_2$
dans laquelle $x + y = 5$, x et y étant des nombres entiers ou fractionnaires valant x entre 1,0 et 2,5
et y entre 2,5 et 4,0,
pour l'extraction des composés soufrés de gaz de synthèse contenant du CO et du $H_2$.

2. Utilisation d'un catalyseur au Cu/ZnO, préparé par décomposition thermique d'un précurseur du catalyseur du type hydroxyde-carbonate de zinc de la formule genérale
$Cu_x Zn_y (OH)_6 (CO_3)_2$
dans laquelle $x + y = 5$, x et y étant des nombres entiers ou fractionnaires valant x entre 1,0 et 2,5
et y entre 2,5 et 4,0,
pour l'épuration d'anhydride carbonique souillé par des composés soufrés.

3. Procédé d'extraction des composés soufrés et d'autres impuretés de mélanges gazeux contenant du CO et(ou) du $CO_2$ par réaction à température accrue sur un catalyseur au Cu/ZnO, caractérisé en ce que l'on incorpore aux mélanges gazeux à purifier de l'oxygène ou un mélange gazeux contenant de l'oxygène de façon à obtenir une teneur en oxygène comprise entre 20 et 200 ppm en volume, puis on les fait passer, avant le traitement catalytique proprement dit, à des températures de 50 à 150°C et avec des débits de 500 à 5000 $m^3$ normaux par $m^3$ de catalyseur et par heure, à travers un lit de charbon activé.